# EUROPEAN PATENT APPLICATION

(11) **EP 4 592 550 A1**
(43) Date of publication of application: **30.07.2025**
(21) Application number: 23866799.2
(22) Date of filing: 14.02.2023
(51) Int. Cl.: F16F 15/04, B60R 21/203, B62D 1/11, F16F 1/38, B62D 7/22

(54) **STEERING WHEEL DAMPING APPARATUS AND AUTOMOBILE STEERING WHEEL DAMPING SYSTEM**

(30) Priority: 20.09.2022 CN 202211141460
(71) Applicant: Shanghai Lingang Joyson Safety Systems Co., Ltd., Shanghai 201413 (CN)
(72) Inventor: WANG, Wei, Shanghai 201413 (CN); ZHOU, Houlin, Shanghai 201413 (CN); WANG, Licheng, Shanghai 201413 (CN)
(74) Representative: RGTH
(86) International application number: PCT/CN2023/075921
(87) International publication number: WO 2024/060495

(57) **Abstract**

A steering wheel damping apparatus, comprising an elastic member and a sleeve (2). The sleeve has a sleeve portion (21) extending in a main extension direction and an annular supporting portion (22) located at one end of the sleeve portion and extending in a direction perpendicular to the main extension direction. The elastic member is molded on the sleeve, the part covering the annular supporting portion forms an elastic supporting portion (3), and the part covering the sleeve portion to form an elastic insertion portion (1); the elastic insertion portion is configured to pass, in an interference fit manner, through an opening of a member to be mounted; the elastic insertion portion comprises a plurality of inner ribs (11) recessed inwards from the outer surface of the elastic insertion portion and outer ribs (12) protruding outwards from the inner surface of the elastic insertion portion; and the inner ribs and the outer ribs are arranged in a staggered manner in the circumferential direction of the elastic insertion portion. According to the damping apparatus, by providing the inner ribs and the outer ribs arranged in a staggered manner, the entire elastic insertion portion is made to deform by means of simultaneous damping by the inner ribs and the outer ribs, large deformation of the elastic insertion portion can be avoided, and good deformation capacity is achieved, thereby avoiding collisions between a bolt and a steel plate in the steering wheel.

## Description

### Technical Field

The present description relates to the technical field of automobile steering wheels, and in particular to a steering wheel damping apparatus and an automobile steering wheel damping system.

### Background Art

In order to improve the stability of the steering wheel for driving in a curve, it is generally necessary to install a damping apparatus in the steering wheel to reduce the vibration of the steering wheel. For example, CN111801511A discloses a damper unit for use in a damping assembly for a steering wheel. The elastic damper element is molded onto the inner sleeve and has a plurality of elastic ribs forming radially outer engagement surfaces and a plurality of elastic support posts spaced from one another in the circumferential direction and being flexible in all directions transverse to the axis. The application achieves a damping effect on the steering wheel by using a plurality of mutually spaced elastic ribs. However, during use of the damper unit, it is found that since the elastic ribs are arranged in a manner spaced apart from each other, when the steering wheel vibrates greatly, the bolt tends to press the elastic ribs to deform downwards greatly, resulting in the bolt colliding with the sleeve and/or the steel plate in the steering wheel and thus generating noise.

### Summary of the Invention

In view of the above, the embodiments of the present description provide a steering wheel damping apparatus and an automobile steering wheel damping system. By providing the inner ribs and the outer ribs arranged in a staggered manner, the entire elastic insertion portion is made to by means of simultaneous damping by the inner ribs and the outer ribs, and large deformation of the elastic insertion portion can be avoided, thereby avoiding collisions between a bolt and a steel plate in the steering wheel. The closed gear-like structure has better deformation characteristics and better effect on vibration damping of the steering wheel in multiple directions.

The embodiments of the present description provide the following technical solutions. A steering wheel damping apparatus including: an elastic member and a sleeve, wherein the sleeve has a sleeve portion extending in a main extension direction and an annular supporting portion located at one end of the sleeve portion and extending in a direction perpendicular to the main extension direction; the elastic member is molded on the sleeve, the part covering the annular supporting portion forms an elastic supporting portion, and the part covering the sleeve portion to form an elastic insertion portion; an elastic rib portion is provided on the elastic insertion portion at an end away from the elastic supporting portion; the elastic insertion portion between the elastic rib portion and the elastic supporting portion forms a clamping portion having a smaller radial dimension than that of the elastic rib portion; the elastic insertion portion is configured to pass, in an interference fit manner, through an opening of a member to be mounted; the elastic rib portion is configured to be located or abutted on one side of the opening, and the elastic supporting portion is configured to be located or abutted on the other side of the opening; and the clamping portion is configured to be embedded in the opening, characterized in that the elastic insertion portion includes a plurality of inner ribs recessed inwards from an outer surface of the elastic insertion portion and outer ribs protruding outwards from an inner surface of the elastic insertion portion; and the inner ribs and the outer ribs are arranged in a staggered manner in a circumferential direction of the elastic insertion portion.

Preferably, the plurality of inner ribs and the plurality of outer ribs are integrally formed; the plurality of inner ribs and the plurality of outer ribs are staggered; the elastic insertion portion forms a closed gear-like structure in a cross-section perpendicular to the main extension direction of the sleeve portion.

Preferably, the inner rib includes a first inclined surface and a second inclined surface arranged in a V-shape; an inner surface of a connecting portion of the first inclined surface and the second inclined surface at least partially abuts against an outer surface of the sleeve portion.

Preferably, an end of an inner surface of the connecting portion close to the elastic supporting portion abuts against an outer surface of the sleeve portion to form an abutting portion; and an end away from the elastic supporting portion extends radially outwards along the sleeve portion to form a first deformation portion.

Preferably, the elastic rib portion is provided on an outer surface of the outer rib; and the elastic rib portion is located on the same horizontal plane as the first deformation portion.

Preferably, the first deformation portion includes a first inclined surface, a first transition surface, and a second inclined surface; the first inclined surface and the second inclined surface each gradually move away from the sleeve in a direction away from the elastic supporting portion; and/or,
the elastic rib includes a second deformation portion; the outer surface of the second deformation portion includes a third inclined surface, a second transition surface and a fourth inclined surface; the third inclined surface gradually moving away from the sleeve in a direction away from the elastic supporting portion; and the fourth inclined surface gradually moves closer to the sleeve.

Preferably, the fourth inclined surface of the elastic rib and the second inclined surface of the top of the inner rib cooperate with each other such that the elastic rib moves downwards as a whole when the top of the elastic insertion portion is deformed downwards under a Z-direction force.

Preferably, a plurality of first projections and a plurality of second projections protrude from an end face of the elastic supporting portion connected to the elastic insertion portion; the plurality of first projections and the plurality of second projections are staggered; and the plurality of first projections respectively correspond to the plurality of outer ribs one by one, and the plurality of second projections respectively correspond to the plurality of inner ribs one by one;
Preferably, the first projection is cylindrical, the second projection is elongated, and the height of the second projection is greater than the height of the first projection.

Preferably, an outer surface of one or more of the plurality of inner ribs is provided with an outer filler portion molded on the elastic insertion portion to extend from an end close to the elastic supporting portion to an end away from the elastic supporting portion, the length of which is less than or equal to the height of the clamping portion.

The outer filler portion and/or the clamping portion abut against a circumferential edge of the opening when the elastic insertion portion is subjected to damping.

Preferably, a gap is left between an outer periphery of the outer filler portion and the circumferential edge of the opening; and the outer filler portion is force-deformed into contact with the circumferential edge of the opening when the top of the elastic insertion portion is force-deformed downwards in the Z-direction.

Preferably, the upper surface and the outer periphery of the outer filler portion are flush with the clamping portion.

Preferably, an inner surface of one or more of the plurality of outer ribs is provided with an inner filler portion molded on the elastic insertion portion to extend from an end close to the elastic supporting portion to an end away from the elastic supporting portion, the length of which is less than or equal to the height of the clamping portion; and the inner filler portion abuts against the inner surface of the outer rib and the outer surface of the sleeve portion, respectively, in the radial direction of the elastic insertion portion.

An automobile steering wheel damping system includes a steering wheel frame, a fastener, a mounting plate, a spring element and the damping apparatus according to any one of the above, wherein the mounting plate is provided with a mounting hole; the damping apparatus passes into the mounting hole from one side of the mounting plate, so that the clamping portion is embedded in the mounting hole; the fastener is fixed to the steering wheel frame after passing through the sleeve from the other side of the mounting plate; and the spring element is sheathed on the fastener and supported between the elastic supporting portion of the damping apparatus and the steering wheel frame.

Compared with the prior art, the above-mentioned at least one technical solution adopted by the embodiments of the present description can achieve the advantageous effects that at least include the followings.

In the way of integral damping, by having a plurality of inner ribs recessed inwards from an outer surface of the elastic insertion portion and outer ribs protruding outwards from an inner surface of the elastic insertion portion, the inner ribs and the outer ribs are are arranged in a staggered manner. By means of the simultaneous damping of the inner rib and the outer rib, the elastic insertion portion is deformed integrally, so as to have a better deformation capability, and large deformation of the elastic insertion portion can be avoided, thereby avoiding collisions between a bolt and a steel plate in the steering wheel.

### Brief Description of the Drawings

In order to explain the technical solutions in the embodiments of the disclosure more clearly, the following will briefly introduce the drawings required to be used in the embodiments. Obviously, the drawings in the description below are only some embodiments of the disclosure. It will be possible to those skilled in the art to obtain other drawings according to these drawings without involving any inventive effort.
Fig. 1 is a perspective sectional view of a steering wheel damping apparatus according to the present invention;
Fig. 2 is a perspective cross-sectional view of a steering wheel damping apparatus according to the present invention with a sleeve omitted;
Fig. 3 is a structurally schematic view of a steering wheel damping apparatus according to the present invention;
Fig. 4 is a structurally schematic view of a steering wheel damping apparatus in deformation by force according to the present invention.
Fig. 5 is a cross-sectional view of Fig. 4 in the direction of the dashed line;
Fig. 6 is a structurally schematic view of a steering wheel damping apparatus according to the present invention;
Fig. 7 is a top view of Fig. 6;
Fig. 8 is a cross-sectional view taken along the direction A-A of Fig. 7;
Fig. 9 is a structurally schematic view of a steering wheel damping apparatus according to the present invention;
Fig. 10 is a structurally schematic view of an automobile steering wheel damping system according to the present invention.

### Detailed Description

The embodiments of the present application are described in detail in combination with the accompanying drawings below.

Other advantages and effects of the present application will become readily apparent to those skilled in the art from the following detailed description by illustrating the embodiments of the present application by way of specific examples below. Obviously, the described embodiments are some, but not all, embodiments of the present application. The present application may be practiced or applied in various other specific embodiments. Various details in the description may be modified or varied from different perspectives and applications without departing from the spirit of the application. It should be noted that, without conflicts, embodiments and features of the embodiments may be combined with each other. Based on the embodiments in the present application, all other embodiments obtained by a person skilled in the art without involving any inventive effort are within the scope of protection of the disclosure.

It is intended that the following describe various aspects of embodiments within the scope of the appended claims. It should be apparent that aspects described herein may be embodied in a wide variety of forms and that any specific structure and/or function described herein is merely illustrative. Based on the present application, one skilled in the art will appreciate that one aspect described herein may be implemented independently of any other aspects, and that two or more of these aspects may be combined in various ways. For example, an apparatus may be implemented and/or a method practiced using any number and aspects set forth herein. Additionally, such an equipment can be implemented and/or such a method can be practiced using other structure and/or functionality in addition to one or more of the aspects set forth herein.

It should also be noted that the figures provided in the following examples merely illustrate the basic idea of the present invention in a schematic way. Thus, only the components related to the present application are shown in the drawings instead of being drawn according to the number, shape and size of the components in an actual implementation. In an actual implementation, the type, number and proportion of the components may be changed at will, and the layout of the components may be more complicated. The particular structure and/or function is illustrative only. Based on the present application, one skilled in the art will appreciate that one aspect described herein may be implemented independently of any other aspects, and that two or more of these aspects may be combined in various ways. For example, an apparatus may be implemented and/or a method practiced using any number and aspects set forth herein. Additionally, such an equipment can be implemented and/or such a method can be practiced using other structure and/or functionality in addition to one or more of the aspects set forth herein.

In addition, in the following description, specific details are provided to facilitate a thorough understanding of the examples. However, it will be understood by those skilled in the art that the aspects may be practiced without these specific details.

In the prior art, in order to improve the stability of the steering wheel for driving an automobile in a curve, it is generally necessary to mount a damping apparatus by bolts in the steering wheel to reduce the vibration of the steering wheel. For example, the damper unit and the damper assembly is disclosed in the Chinese patent publication number CN111801511A, and, for example, a vibration damping system for a steering wheel apparatus of a motor vehicle is disclosed in the Chinese patent publication number CN112739931A, so as to increase the stability of the steering wheel. However, the elastic ribs in the above-mentioned two groups of applications are arranged in a manner spaced apart from each other. When the vibration of the steering wheel is large, the bolts tend to press the elastic ribs to deform downwards to a large extent, causing the bolts to collide with the sleeve and/or the steel plate in the steering wheel so as to generate noise. There is also a general need to add elastic cushions, which makes the use of damping apparatus inconvenient.

Through extensive and in-depth experiments, the inventors have designed a steering wheel damping apparatus in which the elastic insertion portion is integrally deformed by providing inner ribs and outer ribs arranged in a staggered manner, and the elastic insertion portion has good deformation capability while avoiding collision of parts such as bolts.

The technical problem to be solved by the present invention is to avoid the noise generated when the steering wheel vibrates greatly.

More specifically, according to the solution adopted by the present invention, in the way of integral damping, by having a plurality of inner ribs recessed inwards from an outer surface of the elastic insertion portion and outer ribs protruding outwards from an inner surface of the elastic insertion portion, the inner ribs and the outer ribs are are arranged in a staggered manner. By means of the simultaneous damping of the inner rib and the outer rib, the elastic insertion portion is deformed integrally, so as to have a better deformation capability, thereby avoiding the collision between the bolt and the sleeve and/or the steel plate in the steering wheel.

The technical solutions provided by various embodiments of the present application are described below with reference to the accompanying drawings.

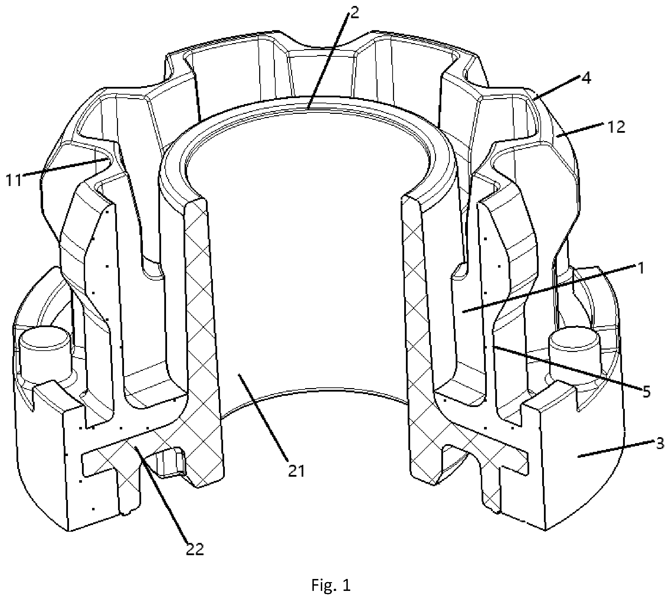

As shown in Figs. 1-5, a steering wheel damping apparatus includes an elastic member and a sleeve 2. The sleeve 2 has a sleeve portion 21 extending in a main extension direction and an annular supporting portion 22 located at one end of the sleeve portion 21 and extending perpendicular to the main extension direction. The elastic member is molded on the sleeve 2. The elastic member and the sleeve 2 are integrally formed in a mold for manufacturing. The part of the elastic member covering the annular supporting portion 22 forms an elastic supporting portion 3, and the elastic supporting portion 3 can serve as an elastic buffer. The part of the elastic member covering the sleeve portion 21 forms an elastic insertion portion 1. An elastic rib portion 4 is provided on the elastic insertion portion 1 at one end away from the elastic supporting portion 3. The elastic insertion portion 1 between the elastic rib portion 4 and the elastic supporting portion 3 forms a clamping portion 5 having a smaller radial dimension than that of the elastic rib portion 4. The elastic insertion portion 1 is configured to pass, in an interference fit manner, through an opening of a member to be mounted. The installation of the elastic insertion portion 1 through the member to be mounted is facilitated by providing the opening. The elastic rib portion 4 is configured to be located or abutted against one side of the opening. The elastic supporting portion 3 is configured to be located or abutted against the other side of the opening. The clamping portion 5 is configured to be inserted into the opening. The elastic insertion portion 1 includes a plurality of inner ribs 11 recessed inwards from an outer surface of the elastic insertion portion 1 and outer ribs 12 protruding outwards from an inner surface of the elastic insertion portion 1. The inner ribs 11 and the outer ribs 12 are staggered in a circumferential direction of the elastic insertion portion 1. By arranging the inner ribs 11 and the outer ribs 12 in a staggered manner in the circumferential direction of the elastic insertion portion 1, when the steering wheel vibrates, the inner ribs 11 and the outer ribs 12 are damped at the same time to deform the elastic insertion portion 1 as a whole, and a better deformation characteristic of the elastic insertion portion 1 is obtained, thereby avoiding a larger deformation of the elastic insertion portion 1 due to larger vibration.

Furthermore, the plurality of inner ribs 11 and the plurality of outer ribs 12 are integrally formed. The plurality of the inner ribs 11 and the plurality of the outer ribs 12 are staggered. The elastic insertion portion 1 forms a closed gear-like structure in a cross section perpendicular to the main extension direction of the sleeve portion 21. The elastic insertion portion 1 of the closed gear-like structure is formed by the inner ribs 11 and the outer ribs 12, so that when the steering wheel vibrates due to the vibration transmitted to the steering wheel by the engine and the road, the elastic insertion portion 1 deforms as a whole. The inner ribs 11 and the outer ribs 12 are mutually restrained from deforming due to the force of the elastic insertion portion 1 as a whole. The deformation amplitude of the elastic insertion portion 1 is small, and the vibration amplitude of the steering wheel can be effectively improved.

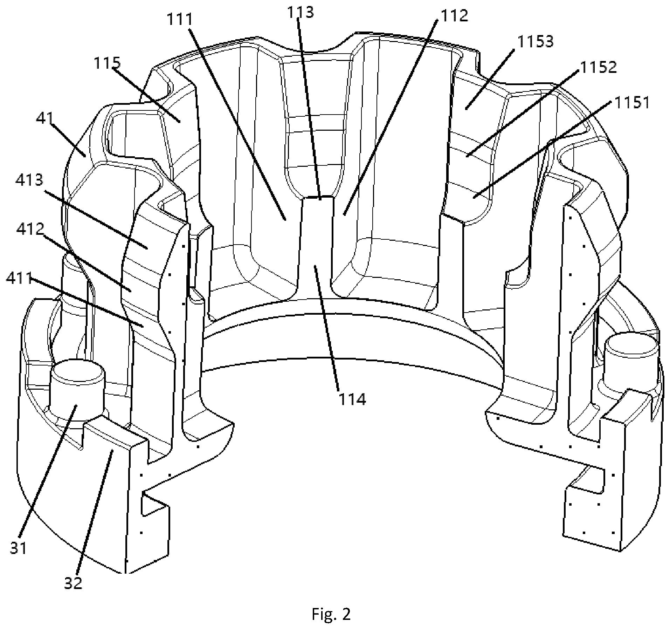

As shown in Fig. 2, in some embodiments, the inner rib 11 includes a first inclined plane 111 and a second inclined plane 112 in a V-shaped arrangement. The inner surface of the connecting portion 113 of the first inclined plane 111 and the second inclined plane 112 at least partially abuts against the outer surface of the sleeve portion 21. The inner side wall of the inner rib 11 adjacent to the elastic supporting portion 3 is constituted by the first inclined plane 111 and the second inclined plane 112 in a V-shaped arrangement, ensuring the stability of the inner rib 11 when deformation occurs. Meanwhile, the first inclined plane 111 and the second inclined plane 112 are connected via the connecting portion 113. The inner surface of the connecting portion 113 abuts against the outer surface of the sleeve portion 21, and the sleeve portion 21 can play a certain limiting role on the connecting portion 113 to ensure the deformation direction of the inner rib 11.

Furthermore, one end of the inner surface of the connecting portion 113 close to the elastic supporting portion 3 abuts against the outer surface of the cylinder portion 21 to form an abutting portion 114. The connecting portion 113 and the cylinder portion 21 form an abutting portion 114 therebetween. When the cylinder portion 21 undergoes radial vibration, the cylinder portion 21 transmits the vibration to the first inclined surface 111 and the second inclined surface 112 via the abutting portion 114 for damping. One end of the connecting portion 113 far from the elastic supporting portion 3 extends radially outwards along the cylinder portion 21 to form a first deformation portion 115. The first deformation portion 115 serves to damp the vibration of the steering wheel in the axial direction of the cylinder portion 21.

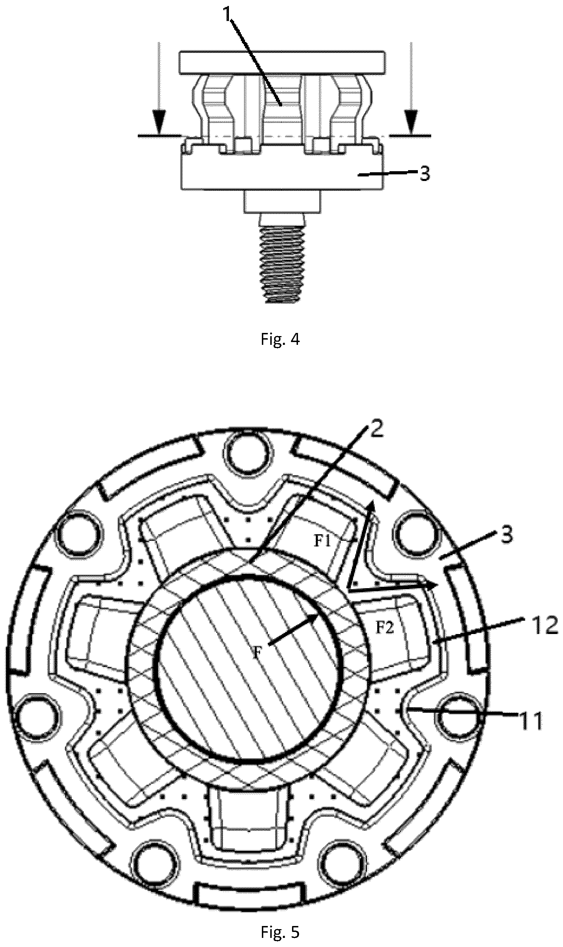

It should be noted that the V-shaped structure of the inner rib 11 forms a stable triangular force-bearing structure, and the first inclined surface 111 and the second inclined surface 112 provide stable support when subjected to the radial shock force of the sleeve 2. As shown in Fig. 5, the radially outward pressure F along the sleeve portion 21 is decomposed into a component force F1 borne by the first inclined surface 111 and a component force F2 borne by the second inclined surface 112, so as to achieve an excellent damping effect. At the same time, the closed profile structure prevents the sleeve 2 from colliding with peripheral components in extreme stress situations. Depending on the configuration of the steering wheel, the shape of the structure of the steering wheel, so that the length of the abutting portion 114 and/or the width of the abutting portion 114 can be adjusted, thereby achieving a vibration frequency suitable for steering wheels of different structures and ensuring a damping effect.

Further, the elastic rib portion 4 is provided on the outer surface of the outer rib 12, and the elastic rib portion 4 is located on the same horizontal plane as the first deformation portion 115. When the elastic rib portion 4 passes through the mounting hole in the steering wheel, the elastic rib portion 4 is stressed and deformed to push the first deformation portion 115 to move radially inward of the sleeve 21. After passing through the mounting hole, the elastic rib portion 4 is pushed to rebound and maintain the clamping force under the elastic restoring force of the first deformation portion 115. By arranging the elastic rib portion 4 and the first deformation portion 115 in the same horizontal plane, it is possible to make it easier for the elastic rib portion 4 to pass through mounting holes of different sizes, while also ensuring that an effective clamping force is maintained after passing through the mounting holes.

As shown in Fig. 2, in some embodiments, the first deformation portion 115 includes a first inclined surface 1151, a first transition surface 1152 and a second inclined surface 1153. The first inclined surface 1151, the first transition surface 1152 and the second inclined surface 1153 are connected in sequence. The first inclined surface 1151 and the second inclined surface 1153 are gradually away from the sleeve 2 in a direction away from the elastic supporting portion 3. The first inclined surface 1151, the first transition surface 1152 and the second inclined surface 1153 are arranged in sequence in a direction away from the elastic supporting portion 3. The second inclined surface 1153 extends to the top of the first deformation portion 115. The elastic rib portion 4 includes a second deformation portion 41. The outer surface of the second deformation portion 41 includes a third inclined surface 411, a second transition surface 412 and a fourth inclined surface 413. The third inclined surface 411, the second transition surface 412 and the fourth inclined surface 413 are successively connected, and the third inclined surface 411, the second transition surface 412 and the fourth inclined surface 413 are successively arranged in a direction away from the elastic supporting portion 3. The fourth inclined surface 413 extends to the top of the second deformation portion 41. I a direction away from the elastic supporting portion 3, the third inclined surface 411 gradually moves away from the sleeve 2, and the fourth inclined surface 413 gradually approaches the sleeve 2.

Note that, in the direction away from the elastic supporting portion 3, since the inclination direction of the second inclined surface 1153 of the first deformation portion 115 is gradually away from the sleeve 2, and the fourth inclined surface 413 of the second deformation portion 41 is gradually closer to the sleeve 2, when the steering wheel vibrates and the inner rib 11 and the outer rib 12 are subjected to a force in the axial direction of the sleeve 2, the inner rib 11 and the outer rib 12 are deformed to both sides at the same time, so that the inner rib 11 and the outer rib 12 have good deformation characteristics. When the elastic insertion portion 1 is subjected to an axial vibration force, the second inclined surface 1153 is able to decompose the axial deformation of the top of the elastic insertion portion 1 towards the radially outer side of the sleeve 2, and this deformation tends to be similar to the extension of the fourth inclined surface 413 on the outer rib 12, which causes the elastic rib portion 4 as a whole to change downwards and towards the profile, thereby clamping the opening or the peripheral part of the tape mounting more firmly.

Note also that the first inclined surface 1151, the first transition surface 1152, and the second inclined surface 1153 correspond to the third inclined surface 411, the second transition surface 412, and the fourth inclined surface 413, respectively. In a preferred embodiment, the heights of the first inclined surface 1151 and the third inclined surface 411 are the same, the heights of the first transition surface 1152 and the second transition surface 412 are the same, and the heights of the second inclined surface 1153 and the fourth inclined surface 413 are the same, so as to ensure that the first deformation portion 115 and the second deformation portion 41 are simultaneously deformed when the first deformation portion 115 and the second deformation portion 41 are forced in the axial direction of the sleeve portion 21.

Furthermore, the fourth inclined surface 413 of the elastic rib portion 4 and the second inclined surface 1153 of the top of the inner rib 11 cooperate with each other, so that when the top of the elastic insertion portion 1 deforms downwards in the Z direction as a whole, the elastic rib portion 4 moves downwards as a whole. When the top of the elastic insertion portion 1 is subjected to a downward force in the Z direction, the fourth inclined surface 413 of the outer rib 12 and the second inclined surface 1153 of the inner rib 11 deform under the force at the same time, so that the first deformation portion 115 and the second deformation portion 41 deform synchronously, thereby deforming the whole of the elastic insertion portion 1 downwards. Under the same force, compared with the elastic ribs spaced apart from each other, the deformation degree is smaller and the deformation characteristics are better.

Note that the Z direction is a vertical direction from the top of the elastic insertion portion 1 to the elastic supporting portion 3, i.e., an arrow direction as shown in Fig. 4.

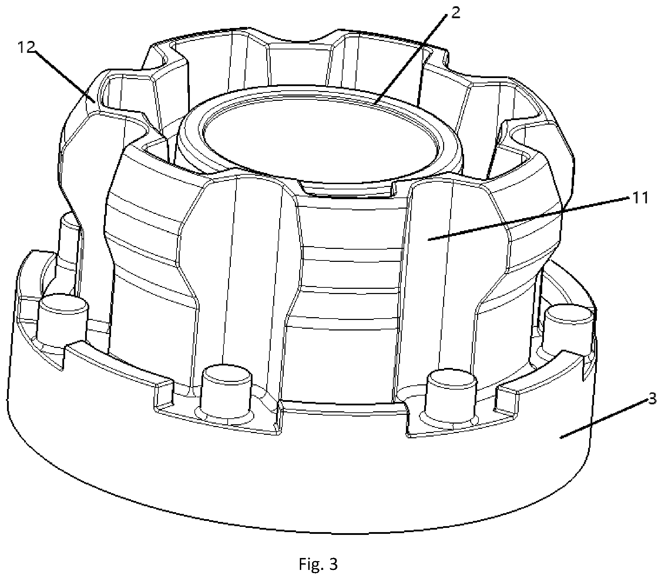

As shown in Figs. 2 and 3, in some embodiments, a plurality of first projections 31 and a plurality of second projections 32 protrude from the end face of the elastic supporting portion 3 connected to the elastic insertion portion 1. The plurality of first projections 31 and the plurality of second projections 32 are staggered. The plurality of first projections 31 respectively correspond to the plurality of outer ribs 12 one by one. The plurality of second projections 32 respectively correspond to the plurality of inner ribs 11 one by one. The height of the second projections 32 is greater than the height of the first projections 31. The plurality of first projections 31 and the plurality of second projections 32 are staggered on the top of the elastic supporting portion 3.

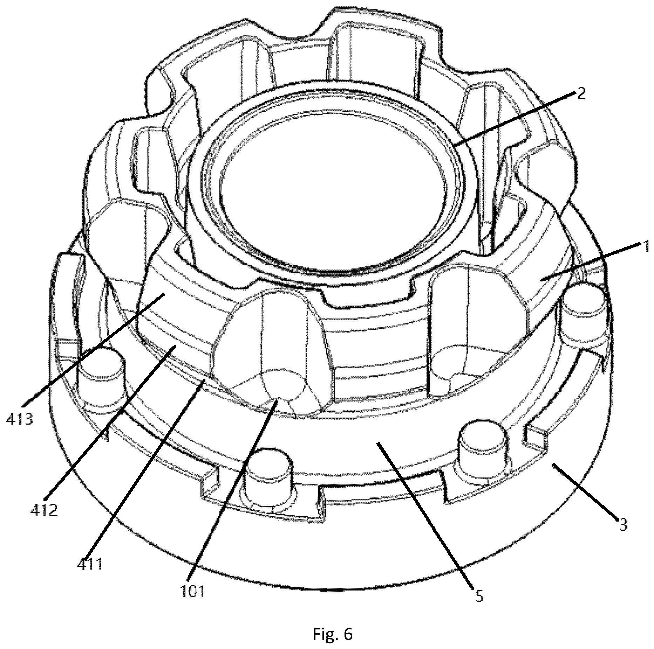

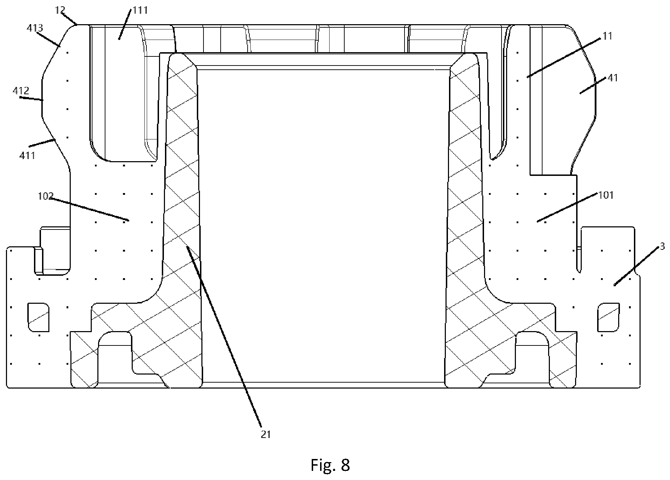

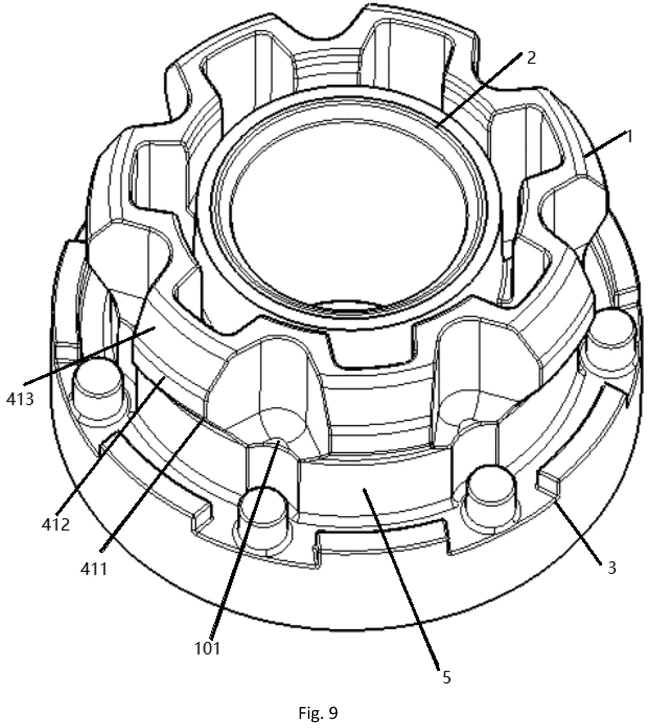

As shown in Figs. 6-9, in a preferred embodiment, the outer surface of one or more of the plurality of inner ribs 11 is provided with an outer filler portion 101 molded on the elastic insertion portion 1 to extend from an end close to the elastic support 3 to an end away from the elastic support 3, the length of which is less than or equal to the height of the clamping portion 5,
When the elastic insertion portion 1 is subjected to damping, the outer filler portion 101 and/or the clamping portion 5 abut against the circumferential edge of the opening.

By providing the outer filler portion 101 on the outer surface of the inner rib 11, when the top of the elastic insertion portion 1 is forced downwards in the Z direction (namely, when the elastic insertion portion 1 is subjected to a damping effect), the inner rib 11 drives the outer filler portion 101 to contact the circumferential edge of the opening, and the outer periphery of the outer filler portion 101 contacts the inner periphery of the opening, so as to ensure the contact area between the outer filler portion 101 and the opening. Thus, the force between the inner rib 11 and the opening can be made uniform. At the same time, the outer filler portion 101 can play the role of adjusting the frequency, so that the damping effect is better.

As shown in the drawings, further, the outer filler portion 101 has a concave portion which is recessed more towards the axial center direction of the sleeve portion 21 than the outer periphery of the clamping portion 5, a gap is provided between the outer periphery of the outer filler portion 101 and the circumferential edge of the opening when the elastic insertion portion 1 passes through the opening of the member to be mounted and is mounted in place, and the outer filler portion 101 is deformed into contact with the circumferential edge of the opening when the top of the elastic insertion portion 1 is deformed downwards under the force in the Z direction. That is, when the elastic insertion portion 1 is not damped, the outer filler portion 101 is not in contact with the circumferential edge of the opening. When the elastic insertion portion 1 is damped, the inner rib 11 moves the outer filler portion 101, and the outer filler portion 101 is in contact with the circumferential edge of the opening. Through the arrangement of the recess feature, the damping effect of the device as a whole is effectively improved, and without changing the main body structure, the damping effect adjustment of different frequency requirements can be achieved merely by changing the structure of the outer filler portion, which improves the versatility of the device.

As shown in Fig. 6, further, the upper surface and the outer circumferential direction of the outer filler portion 101 are flush with the clamping portion 5. By arranging the outer circumferential direction of the outer filler portion 101 to be flush with the outer circumferential direction of the clamping portion 5, the upper surface of the outer filler portion 101 is flush with the upper surface of the clamping portion 5. When the elastic insertion portion 1 is subjected to damping, the outer filler portion 101 and the clamping portion 5 are forced synchronously, the outer circumferential direction of the outer filler portion 101 and the outer circumferential direction of the clamping portion 5 simultaneously abut against the circumferential edge of the opening, and the contact area between the outer filler portion 101 and the clamping portion 5 and the opening is large, so that the service life can be further increased.

It should be noted that the upper surface of the outer filler portion 101 is provided with a chamfer at the contact with the inner rib 11, so as to serve as a transition for the connection portion of the elastic insertion portion 1 and the filler portion 10 to be inserted into the outer mount, so that the filler portion 10 is in contact with the outer mount.

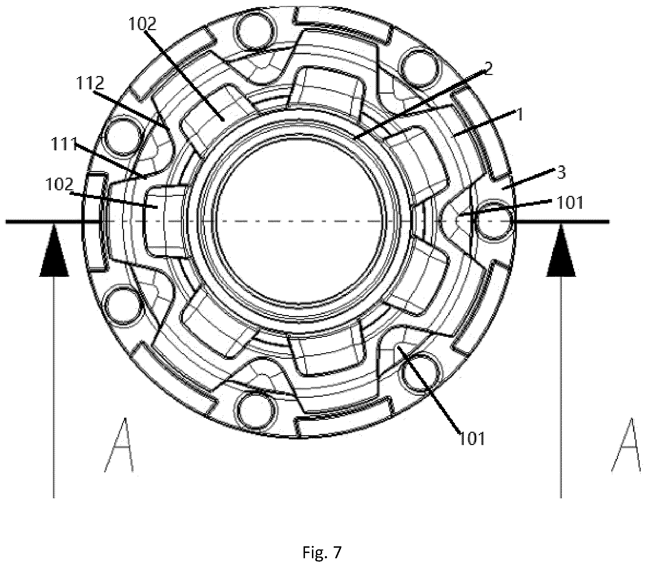

As shown in Figs. 7-8, in a preferred embodiment, the inner surface of one or more of the plurality of outer ribs 11 is provided with an inner filler portion 102 molded on the elastic insertion portion 1 to extend from an end close to the elastic supporting portion 3 to an end away from the elastic supporting portion 3, the length of which is less than or equal to the height of the clamping portion 5. The inner filler portion 102 abuts against the inner surface of the outer rib 11 and the outer surface of the sleeve portion 21 respectively in the radial direction of the elastic insertion portion 1. By providing the inner filler portion 102 on the inner surface of the outer rib 11, two opposite sides of the inner filler portion 102 respectively abut against the inner surface of the outer rib 11 and the outer surface of the cylinder part 21. When the elastic insertion portion 1 is subjected to a damping action, the outer rib 11 drives the inner filler portion 102 to move. Since the inner filler portion 102 abuts against the outside of the cylinder part 21, the contact area between the inner filler portion 102 and the cylinder part 21 is larger, and the force-bearing area of the cylinder part 21 can be increased, so that the force of the cylinder part 21 is relatively uniform and the service life is ensured.

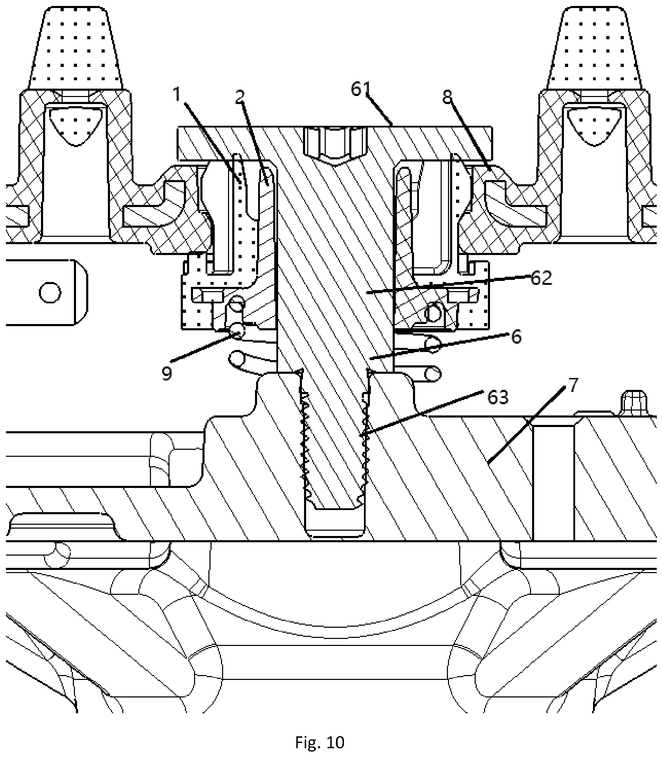

As shown in Fig. 10, based on the same inventive concept, an embodiment of the present description provides an automobile steering wheel damping system, including a steering wheel frame 7, a fastener 6, a mounting plate 8, a spring element 9 and a damping apparatus of any of the above. The mounting plate 8 has a mounting hole. The damping apparatus passes into the mounting hole from one side of the mounting plate 8 so that the clamping portion 5 is inserted into the mounting hole, and the fastener 6 is fixed to the steering wheel frame 7 after penetrating the sleeve 2 from the other side of the mounting plate 8. The spring element 9 is sheathed over the fastener 6 and supported between the elastic supporting portion 3 of the damping apparatus and the steering wheel frame 7. When the damping apparatus is damped, the elastic insertion portion 1 deforms as a whole, the damping apparatus is subjected to an axial force of the fastener 6, and the spring element 9 can act to cushion and provide a reaction force. At the same force, the deformation of the elastic insertion portion 1 is small because the elastic insertion portion 1 deforms as a whole.

In various embodiments, the mounting plate 8 may be used to mount an airbag device or multimedia item, and may also be used as a horn plate to activate a vehicle whistle. Before the vehicle whistle is started, the first projection 31 is in contact with the mounting plate 8, the first projection 31 has an effect on the resonance frequency of vibration damping. There is a certain distance between the second projection 32 and the mounting plate 8. When the vehicle whistle is started, the first projection 31 is compressed to the same height as the second projection 32, the mounting plate 8 is in contact with the first projection 31 and the second projection 32 at the same time. The first projection 31 is cylindrical, the second projection 32 is elongated, and the first projection 31 adopts a cylindrical arrangement, which ensures both the flexible interface and the axial compression when the vehicle whistle is started.

It should be noted that the first projection 31 and the second projection 32 may be made of materials having different elastic strengths, and the height difference between the first projection 31 and the second projection 32 may be designed according to the specific structure of the steering wheel, which will not be described in detail herein.

In practice, the connecting piece 6 includes an integrally formed connecting segment 63, a guide segment 62 and a pressure plate segment 61. The connecting segment 63 is connected to the steering wheel frame 7. The guide segment 62 passes through the sleeve 2. The pressure plate segment 61 is in contact with the end face of the elastic insertion portion 1 away from the elastic supporting portion 3, and is connected to the steering wheel frame 7 via the connecting segment 63. An external thread can be provided on the connecting segment 63, so that the connecting segment 63 is screwed to the steering wheel frame 7, and the pressure plate segment 61 is in contact with the top end of the elastic insertion portion 1. The elastic insertion portion 1 may act as a stop, and the upper projection of the elastic support part 3 is in contact with the bottom of the mounting plate 8, thereby realizing the mounting of the damping apparatus.

Further, along the axial direction of the sleeve 2, a gap of a first distance is provided between the pressure plate segment 61 and the rigid support plate 8, a gap interference of a second distance is provided between the pressure plate segment 61 and the elastic rib portion 4, and a gap of a third distance is provided between the pressure plate segment 61 and the top of the sleeve 2. The first distance is smaller than the second distance, and the first distance is smaller than the third distance. The first distance typically has a value in the range of 0.3-0.4 mm, preferably 0.35 mm. The second distance typically has a value in the range of 0.45-0.55 mm, preferably 0.5 mm. The third distance typically has a value in the range of 0.45-0.55 mm, preferably 0.5 mm. Since the gap of the first distance between the pressure plate segment 61 and the mounting plate 8 is smaller than the gap interference of the second distance between the pressure plate segment 61 and the elastic rib portion 4, in the mounted state, and the elastic insertion portion 1 is deformed by the pressure of the pressure plate segment 61. Since the first distance is smaller than the third distance, when the damping is performed, the contact between the connecting member 6 and the rigid support plate 8 and the top of the sleeve 2 can be avoided, thereby avoiding the occurrence of abnormal sound.

Each embodiment of the present description is described in a progressive manner with reference to the same or similar parts throughout the various embodiments, and each embodiment is intended to cover variations from the other embodiments. In particular, for the embodiment of the method described hereinafter, the description is relatively simple as it corresponds to the system, to which reference is made for a partial description of the embodiment of the system.

Although only the specific embodiments of the present application have been described above, the scope of the present application is not limited thereto, and any changes or substitutions which can be easily conceived by those skilled in the art within the technical scope disclosed in the present application should be covered by the present application. Accordingly, the scope of protection of this application should be determined with reference to the claims.

## Claims

1. A steering wheel damping apparatus comprising: an elastic member and a sleeve (2), wherein the sleeve (2) has a sleeve portion (21) extending in a main extension direction and an annular supporting portion (22) located at one end of the sleeve portion (21) and extending in a direction perpendicular to the main extension direction; the elastic member is molded on the sleeve (2), the part covering the annular supporting portion forms an elastic supporting portion (3), and the part covering the sleeve portion to form an elastic insertion portion (1); an elastic rib portion (4) is provided on the elastic insertion portion (1) at an end away from the elastic supporting portion (3); the elastic insertion portion (1) between the elastic rib portion (4) and the elastic supporting portion (3) forms a clamping portion (5) having a smaller radial dimension than that of the elastic rib portion (4); the elastic insertion portion (1) is configured to pass, in an interference fit manner, through an opening of a member to be mounted; the elastic rib portion (4) is configured to be located or abutted on one side of the opening, and the elastic supporting portion (3) is configured to be located or abutted on the other side of the opening; and the clamping portion (5) is configured to be embedded in the opening, **characterized in that** the elastic insertion portion (1) comprises a plurality of inner ribs (11) recessed inwards from an outer surface of the elastic insertion portion (1) and outer ribs (12) protruding outwards from an inner surface of the elastic insertion portion (1); and the inner ribs (11) and the outer ribs (12) arranged in a staggered manner in a circumferential direction of the elastic insertion portion (1).

2. The steering wheel damping apparatus according to claim 1, **characterized in that** the plurality of inner ribs (11) and the plurality of outer ribs (12) are integrally formed; the plurality of inner ribs (11) and the plurality of outer ribs (12) are staggered; the elastic insertion portion (1) forms a closed gear-like structure in a cross-section perpendicular to the main extension direction of the sleeve portion (21).

3. The steering wheel damping apparatus according to claim 1, **characterized in that** the inner rib (11) comprises a first inclined surface (111) and a second inclined surface (112) arranged in a V-shape; an inner surface of a connecting portion (113) of the first inclined surface (111) and the second inclined surface (112) at least partially abuts against an outer surface of the sleeve portion (21).

4. The steering wheel damping apparatus according to claim 3, **characterized in that** an end of an inner surface of the connecting portion (113) close to the elastic supporting portion (3) abuts against an outer surface of the sleeve portion (21) to form an abutting portion (114); and an end away from the elastic supporting portion (3) extends radially outwards along the sleeve portion (21) to form a first deformation portion (115).

5. The steering wheel damping apparatus according to claim 4, **characterized in that** the elastic rib portion (4) is provided on an outer surface of the outer rib (12); and the elastic rib portion (4) is located on the same horizontal plane as the first deformation portion (115).

6. The steering wheel damping apparatus according to claim 5, **characterized in that** the first deformation portion (115) comprises a first inclined surface (1151), a first transition surface (1152), and a second inclined surface (1153); the first inclined surface (1151) and the second inclined surface (1153) each gradually move away from the sleeve (2) in a direction away from the elastic supporting portion (3); and/or,
the elastic rib (4) comprises a second deformation portion (41); the outer surface of the second deformation portion (41) comprises a third inclined surface (411), a second transition surface (412) and a fourth inclined surface (413); the third inclined surface (411) gradually moving away from the sleeve (2) in a direction away from the elastic supporting portion (3); and the fourth inclined surface (413) gradually moves closer to the sleeve (2).

7. The steering wheel damping apparatus according to claim 6, **characterized in that** the fourth inclined surface (413) of the elastic rib (4) and the second inclined surface (1153) of the top of the inner rib (11) cooperate with each other such that the elastic rib (4) moves downwards as a whole when the top of the elastic insertion portion (1) is deformed downwards under a Z-direction force.

8. The steering wheel damping apparatus according to any one of claims 1-7, **characterized in that** an outer surface of one or more of the plurality of inner ribs (11) is provided with an outer filler portion (101) molded on the elastic insertion portion (1) to extend from an end close to the elastic supporting portion (3) to an end away from the elastic supporting portion (3), the length of which is less than or equal to the height of the clamping portion (5); and the outer filler portion (101) and/or the clamping portion (5) abut against a circumferential edge of the opening when the elastic insertion portion (1) is subjected to damping.

9. The steering wheel damping apparatus according to claim 8, **characterized in that** a gap is left between an outer periphery of the outer filler portion (101) and the circumferential edge of the opening; and the outer filler portion(101) is force-deformed into contact with the circumferential edge of the opening when the top of the elastic insertion portion (1) is force-deformed downwards in the Z-direction.

10. The steering wheel damping apparatus according to claim 8, **characterized in that** the upper surface and the outer periphery of the outer filler portion (101) are flush with the clamping portion (5).

11. The steering wheel damping apparatus according to any one of claims 1-7, **characterized in that** an inner surface of one or more of the plurality of outer ribs (11) is provided with an inner filler portion (102) molded on the elastic insertion portion (1) to extend from an end close to the elastic supporting portion (3) to an end away from the elastic supporting portion (3), the length of which is less than or equal to the height of the clamping portion (5); and the inner filler portion (102) abuts against the inner surface of the outer rib (11) and the outer surface of the sleeve portion (21), respectively, in the radial direction of the elastic insertion portion (1).

12. The steering wheel damping apparatus according to any one of claims 1-7, **characterized in that** a plurality of first projections (31) and a plurality of second projections (32) protrude from an end face of the elastic supporting portion (3) connected to the elastic insertion portion (1); the plurality of first projections (31) and the plurality of second projections (32) are staggered; the plurality of first projections (31) respectively correspond to the plurality of outer ribs (12) one by one, and the plurality of second projections (32) respectively correspond to the plurality of inner ribs (11) one by one; and the first projection (31) is cylindrical, the second projection (32) is elongated, and the height of the second projection (32) is greater than the height of the first projection (31).

13. An automobile steering wheel damping system, **characterized in that** it comprises a steering wheel frame (7), a fastener (6), a mounting plate (8), a spring element (9) and the damping apparatus according to any one of claims 1-12, wherein the mounting plate (8) is provided with a mounting hole; the damping apparatus passes into the mounting hole from one side of the mounting plate (8), so that the clamping portion (5) is embedded in the mounting hole; the fastener (6) is fixed to the steering wheel frame (7) after passing through the sleeve (2) from the other side of the mounting plate (8); and the spring element (9) is sheathed on the fastener (6) and supported between the elastic supporting portion (3) of the damping apparatus and the steering wheel frame (7).
